# EUROPÄISCHE PATENTSCHRIFT

(11) **EP 1 119 455 B1**
(45) Veröffentlichungstag und Bekanntmachung des Hinweises auf die Patenterteilung: **30.03.2005**
(21) Anmeldenummer: 99941592.0
(22) Anmeldetag: 11.08.1999
(51) Int. Cl.: B32B 27/06, B32B 15/08, B32B 31/12, B05D 7/16, B62D 29/04, B05D 7/04, C08J 7/04

(54) **MIT MEHREREN SCHICHTEN BESCHICHTETE FOLIEN UND DEREN VERWENDUNG IM AUTOMOBILBAU**
FILMS COATED WITH SEVERAL LAYERS AND THEIR USE IN AUTOMOBILE CONSTRUCTION
FEUILLES COMPORTANT PLUSIEURS COUCHES ET LEUR UTILISATION DANS LA CONSTRUCTION AUTOMOBILE

(30) Priorität: 07.09.1998 DE 19840807
(43) Veröffentlichungstag der Anmeldung: 01.08.2001
(73) Patentinhaber: BASF Coatings AG, 48165 Münster (DE)
(72) Erfinder: KIRIAZIS, Leonidas, D-48165 Münster (DE); WEGNER, Egon, D-48143 Münster (DE)
(74) Vertreter: Fitzner, Uwe
(86) Internationale Anmeldenummer: PCT/EP1999/005893
(87) Internationale Veröffentlichungsnummer: WO 2000/013893

(56) Entgegenhaltungen:
- DE-A- 19 517 067
- DE-A- 19 517 068
- US-A- 4 959 189
- US-A- 5 030 514
- US-A- 5 268 215
- US-A- 5 518 786

## Beschreibung

In der EP-A-374 551 werden beschichtete Substrate offenbart, die zur Herstellung von Anbauteilen für Automobilkarosserien geeignet sind. Die in der EP-A-374 551 beschriebenen beschichteten Substrate bestehen aus Metallblechen, die mit mindestens einer Lackschicht lackiert sind oder aus Verbundwerkstoffen, deren Oberflächenschicht aus den lackierten Metallblechen besteht.

Der vorliegenden Erfindung lag die Aufgabe zugrunde, beschichtete Folien bereitzustellen, die auf Formteilrohlinge, vorzugsweise Metallbleche vor deren Verformung, aufbringbar sind, die nach der Verformung der Rohlinge gegenüber den in der EP-A-374 551 offenbarten beschichteten Substraten verbesserte Eigenschaften aufweisen, bei deren Herstellung nur geringe Mengen an Lösemitteln emittiert werden und eine einfache Qualitätsüberwachung möglich ist.

Die Erfindung macht Gebrauch von beschichteten Folien, die dadurch gekennzeichnet sind, daß die Oberfläche einer Kunststoffolie A mit einer Dicke von 10 bis 500 µm mit mindestens einer ggf. pigmentierten Lackschicht lackiert ist.

Auf die nicht lackierte Seite der Trägerfolie ist ggf. eine abziehbare Folie geschichtet.

Solche Folien sind geeignet zur Beschichtung von Formteilrohlingen zur Herstellung von Fahrzeugkarosserien, vorzugsweise Automobilkarosserien sowie zur Herstellung von Anbauteilen für Fahrzeugkarosserien. Deshalb werden erfindungsgemäß vorzugsweise für Automobilkarosserten geeignete Lacke eingesetzt, sofem sie eine für die Erfindungszwecke ausreichende Flexibilität aufweisen, d.h. die ausgehärteten Beschichtungssysteme weisen T-Bend-Werte ≤ 3,0 vorzugsweise ≤ 2,0, besonders bevorzugt ≤ 1,0 auf.

Die mit den erfindungsgemäßen Folien beschichteten Automobilkarosserien zeichnen sich durch eine sehr hohe Resistenz gegenüber Steinschlag und Korrosion aus. Weitere Vorteile der erfindungsgemäßen beschichteten Folien bestehen darin, daß sie auf Anlagen mit einem geringen Raumbedarf herstellbar sind. Außerdem werden durch den Einsatz von lackierten Kunststoffolien für die Beschichtung von Karosserien nur sehr geringe Mengen an organischen Lösemitteln emittiert. Vorteilhafterweise setzt daher die Qualitätsüberwachung schon bei der lackierten Kunststoffolie ein, wohingegen beim konventionellen Lackieren von Metallblechen die Qualität der Beschichtung erst nach Applikation der Lackschichten auf das Substrat beurteilt werden kann und im Falle von Qualitätsmängeln das lackierte Substrat als Ganzes verworfen werden muß.

Bei der Herstellung der erfindungsgemäßen Folien A kommen vorwiegend Stoffe in Betracht, die aus einem Polyolefin, einem Polyamid, einem Polyurethan, einem Polyester, einem Polyacrylat, einem Polycarbonat oder einer Mischung aus unterschiedlichen polymeren Stoffen bestehen. Die eingesetzte Kunststoffolie weist eine Dicke von 10-500, vorzugsweise 20-250 µm auf und kann Farbstoffe und/oder Pigmente enthalten.

Entsprechende Materialien sind auch einsetzbar, wenn die Folie abziehbar ist.

Die mit den erfindungsgemäßen Folien beschichteten Formteile, z.B. Automobilkarosserien, weisen überraschenderweise auch dann eine gute Resistenz gegenüber Steinschlag auf, obwohl keine Füllerzusammensetzung aufgebracht wird.

Als Lack kann jeder für die konventionelle Lackierung von Automobilkarosserien geeignete Decklack bzw. Basislack verwendet werden. Voraussetzung ist allerdings auch hier eine gute Flexibilität des ausgehärteten Lacks, ohne daß die Resistenz gegenüber Steinschlag und Korrosion verlorengeht. Derartige Lacke sind dem Fachmann gut bekannt. Sie enthalten im wesentlichen ein polymeres Bindemittel, ggf. ein Vemetzungsmittel sowie ein Pigment oder eine Mischung aus Pigmenten.
Der eingesetzte Decklack bzw. Basislack kann als Bindemittel beispielsweise ein Polyesterharz, ein Polyurethanharz oder ein Polyacrylatharz oder eine Mischung aus solchen Bindemitteln enthalten. Als Vernetzungsmittel kann der Decklack bzw. Basislack ein Aminoplastharz, ein Polyisocyanatharz, ein Carboxylgruppen enthaltendes Vemetzungsmittel oder eine Mischung aus solchen Vernetzungsmitteln enthalten. Als Beispiele für Pigmente, die in der aufgebrachten pigmentierten Decklackschicht bzw. Basislackschicht enthalten sein können, werden Titandioxid, Phthalocyaninpigmente, Ruß, Eisenoxidpigmente, Aluminiumplättchenpigmente und Perlglanzpigmente genannt.

Die auf die Oberfläche der Kunststoffolie A aufgetragene Lackschicht wird teilweise gehärtet. Der teilweise gehärtete Lack dient als Haftvermittler für die Substratbeschichtung. Der Lack wird erst nach dem Aufkaschieren auf ein Substrat vollständig ausgehärtet.

Die Aushärtung der Lackschicht erfolgt üblicherweise durch Erhitzen auf Temperaturen von 60 bis 230°C. Dabei kommt es zu einer Reaktion zwischen den in den Lacken enthaltenen Bindemitteln und Vemetzungsmitteln, und es werden dreidimensionale polymere Netzwerke gebildet, die der Lackoberfläche eine besonders hohe Resistenz gegenüber mechanischen oder chemischen Angriffen verleihen.

Die Applikation der Lackschichten kann beispielsweise durch Spritzen, Walzen oder Rakeln erfolgen.

Die erfindungsgemäß beschichteten Folien lassen sich zusammenrollen. Daher können die Produkte in Form von Rollen angeboten und geliefert werden. Aus diesem Grunde müssen die erfindungsgemäß eingesetzten Lacke eine für das Zusammenrollen ausreichende Flexibilität aufweisen.

Die Folien können im Prinzip auf alle Formteilrohlinge, vorzugsweise Metallbleche, die zur Herstellung von Fahrzeugkarosserien, von Anbauteilen für Fahrzeugkarosserien, von Haushaltsgeräten, z.B. Kühlschränken, Waschmaschinen, Geschirrspülmaschinen geeignet sind, aufgebracht werden. Vorwiegend werden die Folien auf vorbehandelte Metallbleche aufgebracht. Diese können beispielsweise durch Phosphatierung und/oder Chromatierung vorbehandelt sein.

Die wie oben beschrieben hergestellten lackierten Kunststoffolien können auf die Oberfläche eines Formteilrohlinges, d.h. eines noch nicht verformten Substrats, vorzugsweise Metallblech, laminiert werden.

Die Kunststoffolie A wird zunächst (ggf. nach Beschichtung mit einem Füller)mit einem ggf. pigmentierten Lack beschichtet. Dieser Schichtaufbau wird auf ein Blech kaschiert, aus dem durch Ausschneiden und Verformen Automobilteile hergestellt werden. Die Anforderungen an die Flexibilität der eingesetzten Lacke müssen folglich auch an den beschriebenen Applikationsverfahren orientiert werden.

Im folgenden wird die Erfindung unter Bezugnahme auf die Figuren näher erläutert:
Figur 1 stellt das erfindungsgemäße Beschichtungsverfahren in seiner grundsätzlichen Form dar.
Figur 2 zeigt eine Anlage zur Herstellung einer Verbundrolle mittels einer Spritzanlage.
Figur 3 zeigt eine Exdrudieranlage zur Herstellung der Verbundfolie.

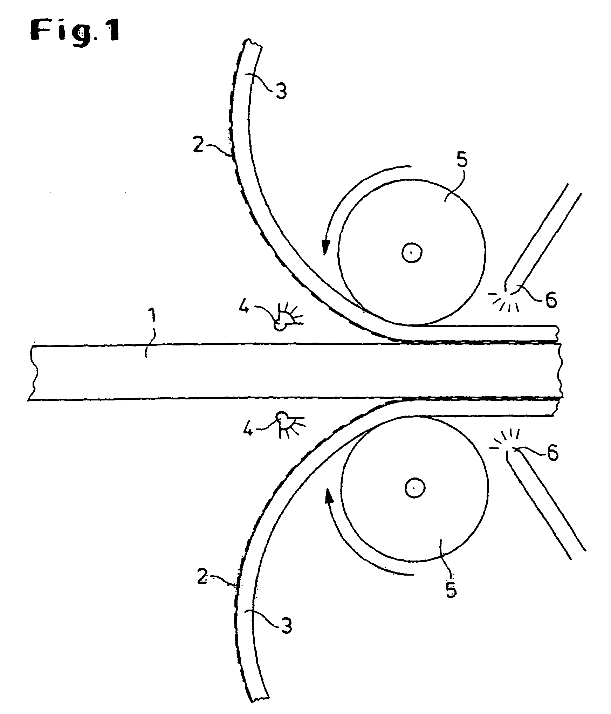

In Figur 1 wird auf ein Substrat 1 die mit dem Lack 2 beschichtete Folie 3 aufgetragen. Mittels der Wärmequellen 4 wird der Lack erwärmt. Anschließend erfolgt mittels Walzen 5 das Aufbringen der lackbeschichteten Folie 3 unter Druck. Mittels der Wärmequellen 6 erfolgt eine zusätzliche Erhitzung der Folie. Durch die Einwirkung von Wärme und Druck können die thermoplastischen Materialien auf der Substratfläche verankert werden. Hierbei wird so vorgegangen, daß der Lack 2 mittels der Wärmequellen 4 nur teilausgehärtet wird und nach dem Aufpressen mittels der Walzen 5 mit Hilfe der Wärmequellen 6 die vollständige Aushärtung erfolgt.

Die Erfindung wird in den folgenden Ausführungsbeispielen näher erläutert.

### Beispiel 1

Marktübliche Polyethylenterephthalat-Folie (PETP) (sowohl 15 µm als auch 50 µm Schichtstärke) wurde mit Metallic Wasserbasislack (Mauritiusblau FWO2-500 H) lackiert und 10 Minuten bei Raumtemperatur und 10 Minuten bei 90 ° C getrocknet.

Dieser Aufbau wurde mit Lackschicht in Richtung Substrat auf Metall, Holz, Papier, Kunststoff (PUR), KTL (7628, 7042) 2 bis 3 Minuten bei 180 °C verpreßt. Im Ergebnis ergab sich eine sehr gute Haftung und ein gutes Appearance.

### Beispiel 2

Orientierte bzw. nicht orientierte Polypropylen-Folie (sowohl 15 µm als auch 50 µm Schichtstärke) wurde mit Metallic Wasserbasislack (Mauritiusblau FWO2-500 H) lackiert und 10 Minuten bei Raumtemperatur und 10 Minuten bei 90 ° C getrocknet.

Dieser Aufbau wurde mit Lackschicht in Richtung Substrat auf Metall, Holz, Papier, Kunststoff (PUR), KTL (7628, 7042) 2 bis 3 Minuten bei 180 ° C verpreßt.

Ergebnis: Folie läßt sich nach der Applikation abziehen, sehr gute Haftung zwischen Lack/Substrat, eine glatte glänzende Lackoberfläche bzw. strukturierte Oberfläche bei Einsatz strukturierter Pressen oder Walzen.

## Patentansprüche

1. Verfahren zur Herstellung von mit Folien beschichteten Formteilen, **dadurch gekennzeichnet, daß**
A) die Oberfläche einer Kunststoffolie (A) mit einer Dicke von 10 bis 500 µm, mit mindestens einer Lackschicht überlackiert wird,
B) die Lackschicht teilweise gehärtet wird,
C) die so hergestellte beschichtete Folie auf ein Substrat kaschiert wird, wobei die Lackschicht Haftvermittler für die Substratbeschichtung ist,
D) der Lack ausgehärtet wird und
E) aus dem so beschichteten Substrat Formteile hergestellt werden

2. Verfahren nach Anspruch 1, **dadurch gekennzeichnet, daß** das Substrat ein Metallblech ist.

3. Verfahren nach Anspruch 1 oder 2, **dadurch gekennzeichnet, daß** die Lackschicht in Schritt A) pigmentiert ist.

4. Verfahren nach einem der Ansprüche 1 bis 3, **dadurch gekennzeichnet, daß** die Kunststoffolie (A) abziehbar ist.

5. Verfahren nach einem der Ansprüche 1 bis 4, **dadurch gekennzeichnet, daß** die Kunststoffolie (A) transparent und gegen UV-Licht beständig ist.

6. Verfahren nach einem der Ansprüche 1 bis 5, **dadurch gekennzeichnet, daß** die Kunststoffolie (A) aus Polyolefin, Polyurethan, Polyamid, Polyester, Polyacrylät oder einer Mischung dieser Polymere besteht.

7. Verfahren nach einem der Ansprüche 1 bis 6, **dadurch gekennzeichnet, daß** die Substrate Fahrzeugkarosserien, vorzugsweise Automobilkarosserien, Haushaltsgeräte, vorzugsweise Kühlschränke, Wasch- und Geschirrspülmaschinen sind.

## Claims

1. Process for producing mouldings coated with films, **characterized in that**
A) the surface of a polymer film (A) having a thickness of from 10 to 500 µm is overcoated with at least one paint coat,
B) the paint coat is partially cured,
C) the coated film thus prepared is laminated onto a substrate, the paint coat being an adhesion mediator for the substrate coating,
D) the paint is fully cured, and
E) mouldings are produced from the substrate thus coated.

2. Process according to Claim 1, **characterized in that** the substrate is a metal sheet.

3. Process according to Claim 1 or 2, **characterized in that** the paint coat in step A) is pigmented.

4. Process according to one of Claims 1 to 3, **characterized in that** the polymer film (A) is removable.

5. Process according to one of Claims 1 to 4, **characterized in that** the polymer film (A) is transparent and resistant to UV light.

6. Process according to one of Claims 1 to 5, **characterized in that** the polymer film (A) is composed of polyolefin, polyurethane, polyamide, polyester, polyacrylate or a mixture of these polymers.

7. Process according to one of Claims 1 to 6, **characterized in that** the substrates are vehicle bodies, preferably automobile bodies, domestic appliances, preferably refrigerators, washing machines and dishwashers.

## Revendications

1. Procédé pour la fabrication de pièces préformées revêtues de films, **caractérisé en ce que**
A) la surface d'un film de plastique (A) d'une épaisseur de 10 à 500 µm est recouverte d'au moins une couche de peinture,
B) la couche de peinture est partiellement durcie,
C) le film revêtu ainsi fabriqué est laminé sur un substrat, la couche de peinture faisant office d'agent adhésif pour le revêtement du substrat,
D) la peinture est durcie et
E) des pièces moulées sont fabriquées à partir du substrat ainsi revêtu.

2. Procédé selon la revendication 1, **caractérisé en ce que** le substrat est une tôle métallique.

3. Procédé selon la revendication 1 ou 2, **caractérisé en ce que** la couche de peinture est pigmentée à l'étape A).

4. Procédé selon l'une quelconque des revendications 1 à 3, **caractérisé en ce que** le film de plastique (A) est pelable.

5. Procédé selon l'une quelconque des revendications 1 à 4, **caractérisé en ce que** le film de plastique (A) est transparent et résistant à la lumière UV.

6. Procédé selon l'une quelconque des revendications 1 à 5, **caractérisé en ce que** le film de plastique (A) est constitué de polyoléfine, de polyuréthane, de polyamide, de polyester, de polyacrylate ou d'un mélange de ces polymères.

7. Procédé selon l'une quelconque des revendications 1 à 6, **caractérisé en ce que** les substrats sont des carrosseries de véhicule, de préférence des carrosseries automobiles, des appareils ménagers, de préférence des réfrigérateurs, des lave-linge et des lave-vaisselle.
